# EUROPEAN PATENT APPLICATION

(11) **EP 1 675 134 A2**
(43) Date of publication of application: **28.06.2006**
(21) Application number: 05112795.9
(22) Date of filing: 22.12.2005
(51) Int. Cl.: H01F 1/10, H01F 41/02, C04B 35/26

(54) **Sintered magnet and method for production thereof**

(30) Priority: 24.12.2004 CN 200410099083; 11.01.2005 CN 200510023312
(71) Applicant: Hengdian Group EMEGC Magnetics Co Ltd, Dongyang City Zhejian Province 322118 (CN)
(72) Inventor: He, Shijin, Zhejian Province 322118 (CN); He, Zhenyu, Zhejian Province 322118 (CN); He, Junyi, Zhejian Province 322118 (CN); Ding, Boming, Zhejian Province 322118 (CN); Bao, Daxin, Zhejian Province 322118 (CN)
(74) Representative: Loven, Keith James

(57) **Abstract**

The present invention relates to a sintered magnet, which has one Curie temperature and comprises the primary phase of a hexagonal ferrite in chemical formula A₁₋ₓMₓFe_{12-y}R_{y}O₁₉, wherein A represents at least one element selected from Sr, Ba and Ca, M represents at least one element selected from the group consisting of rare earth elements and Bi, and must contain La as essential component, R represents at least one element selected from Co, Mn, Zn, Ge and As, and must contain Co as essential component, and the chemical valence of Co is +3, the subscript x and y are the molar ratio, 0 ≤ x ≤ 0.5, 0 ≤ y ≤ 0.5, x and y are not zero at the same time. The present invention provides another sintered magnet, which has one Curie temperature and comprises the primary phase of a hexagonal ferrite in chemical formula A₁₋ₓMₓ[(Fe(III)ₐFe(II)_{1□a})_{12-y}R_{y}]_{z}O₁₉, wherein A represents Sr or/and Ba, M represents at least one element selected from the group consisting of rare earth elements and Bi, and must contain La as essential component, R represents at least one element selected from Co, Ti, Mn, Zn, Ge, As and W, and must contain Co as essential component, and the chemical valence of Co is +3, the subscript x, y, z and a are the molar ratio, 0.05 ≤ x ≤ 0.5, 0.05 ≤ y ≤ 0.5, 0.8 ≤ z ≤ 1.2, 0.997 ≤ a ≤ 0.9995. The process for producing above-mentioned sintered magnet includes the first mixing and presintering, which cause the crystal structure of the ferrite almost perfect and the crystal grain compact. Then the mixture is secondly sintered after adding a little of additives. In this way the density of the sintered magnet is increased, besides the growth of the grain is prohibited in the process of sintering, so both Br and HcJ of the ferrite magnet are increased. Further, the crystal magnetic anisotropy constant K₁ and the intrinsic coercive force (HcJ) are improved and optimal magnetic property is obtained, the technique of the prior art is greatly simplified by means of addition of Co³⁺ and optimization of the ration of the raw materials.

## Description

### Field of the Invention

The present invention relates to magnet material, and particularly relates to the sintered magnet containing a primary phase of hexagonal magnetoplumbite ferrite, and the process for producing the magnet material.

### Background to the Invention

As a sintered permanent magnet material, ferrite magnet materials include calcium ferrite, strontium ferrite and barium ferrite. The sintered permanent ferrite magnet has advantages of stable magnetic property and good anti-demagnetization capability. The material can be corroded hardly and needn't be coated with protecting layer. With high hardness and brittleness, it can be used in the machining and cutting of special cutting tool. Because of the low price and low cost of using ferrite magnet materials can be widely applied to automobile, electrical appliance for family and industry autoimmunization.

A residual magnetic flux density (Br) and an intrinsic coercive force (HcJ) are the most important characteristics of a sintered magnet. Br is in direct proportion to the density of magnet, the degree of orientation and the saturation magnetization (MS) of the magnet. Because of the restriction of structure and property of magnetoplumbite, Br of the conventional permanent magnet is limited to about 446mT at most, and impossibly more than 450mT.

In order to resolve above problems, in 1980's Professor Du Youwei of Nanjing University in China researched on M type Ba-ferrite in detail and found that the addition of La and Zn instead of Ba and Fe could raise its Ms by about 20mT, and its Br was 450mT or more. However, since the anisotropic magnetic field of magnetocrystalline was decreased, it is difficult to obtain Br of 450mT or more and HcJ of 318kA/m or more at the same time. HcJ is in direct proportion to the product (H_{A} × fc) of the anisotropic magnetic field (H_{A}= 2K₁/Ms) and a single magnetic domain grain fraction (fc), in which K₁ represents a anisotropy constant of magnetocrystalline, which is determined by the crystal structure as similar to Ms. The M type Srferrite has K₁ of 3.5 × 10⁶erg/cm³, and the M type Baferrite has K₁ ―of 3.3 × 10⁶erg/cm³. It has been difficult to further raise the K₁ value with conventional method, so we must make progress in single domain of the ferrite grain. A conventional method often resolves the problem by twice mixing, moulding and sintering with other materials.

When a ferrite particle is in a single magnetic domain condition, the intrinsic coercive force (HcJ) has reached its maximum. In order to make a ferrite grain into a single magnetic domain grain, the size of the ferrite particle must be smaller than its critical diameter of 1µm. It is necessary for producing a sintered magnet that the crystal grain size of the sintered magnet must be controlled to 1µm or less. In order to control the crystal grain size of a sintered magnet to 1µm or less, it is necessary to make the powder size in the moulding step 0.5µm or less with taking the double growth of the grains in the sintering step into consideration. So it brings a problem that the productivity is generally deteriorated due to the increase of the moulding time and the cracks in moulding step. Thus, it is very difficult to realize excellent performance and high productivity at the same time.

CN 98801371.1 (Appl. No.) discloses a magnet powder, sintered magnet, the process for these materials, bonded magnet, motor and magnetic recording medium. In this solution the Br is raised and the HcJ is improved by adding elements such as La and Zn into the ferrite. The disclosed magnet includes a hexagonal ferrite as primary phase contains A, Co and R (wherein, A represents Sr, Ba or Ca; R is at least one element selected from the group consisting of rare earth elements (including Y) and Bi). The magnet has at least two different Curie temperatures, which are present within a range of from 400 to 480°C, and an absolute value of the difference between the two different Curie temperatures is 5°C or more. In this method, the addition of elements La and Co occurs in the first mixing. After the first sintering of the mixture, it requires more addition of elements La and Co in order to make the ion of La and Co get into the crystal structure. The method also causes the crystal lattice variation. Although La and Co can be added in the second process, the positions of La and Co have been obligated in the first process by chemical reaction. Thus, the HcJ has been greatly reduced due to the increasing of the sinter temperature for the second sintering, and then the performance of the magnet has been reduced correspondingly. Anyway, disclosed by CN 98801371.1 (Appl. No.), La and Co both get into the inner crystal lattice of the hexagonal ferrite crystal, and the sintered magnet produced has thin crystal boundary without coating. As a result, the sintered magnet has better magnetism characteristics, and the cost is also increased since high content of expensive La and Co is added. It is unfavourable to massive production.

Disclosed by other literatures about sintered magnet, these processes usually use cobaltous oxide (CoO) to satisfy charge balance. It is necessary to strictly control the raw materials and the process in order to obtain a sintered magnet product with good magnetic properties. In addition, the energy consume is increased due to the increasing of the temperature for the presintering and sintering. Thus, the product cost becomes higher correspondingly. On the other hand, it causes the deformation of the magnet and directly affects the performance of the product in this process because the contraction coefficient along an axis of ferrite particles is different with the contraction coefficient along c axis. Partial materials are sintered insufficiently and dark blocks form frequently because the oxygen is not enough in the sintering.

### Summary of the invention

An object of the invention is to provide a sintered magnet and a process for producing the magnet material, which has excellent magnetism characteristics, and has higher Br and higher HcJ at the same time.

Another object of the invention is to provide a sintered magnet and a process for producing the magnet material. In the prior art, the performance of the sintered magnet is influenced by the variance of the crystal lattice because the elements of La and Co get into the crystal structure in the solid phase reaction when high proportion of La and Co is added in the first and second mixing. At the same time, the cost is increased greatly due to the addition of high proportion of La and Co, which is unfavourable to massive production. Present invention overcomes above disadvantages.

Further object of the invention is to provide a sintered magnet and a process for producing the magnet material. In the prior art, the HcJ is decreased because the growth of the crystal particle is out of control along with the increasing of the sinter temperature. The density of the magnet is lower and the Br is decreased along with the increasing the HcJ, thereby the performance of the magnet is obviously reduced. Present invention overcomes above disadvantages.

Still further object of the invention is to provide a sintered magnet and a process for producing the magnet material. In the prior art, the dispersant or lubricant used can cause a series of problems, such as the pollution of the environment, lower degree of orientation, unreasonable temperature of the profiteering and sintering, higher cost, and so on. Present invention overcomes above disadvantages.

Still further object of the invention is to provide a sintered magnet and a process for producing the magnet material. Present invention improves the ration of the raw materials by adding appropriate amount of Fe (II). In the prior art, because the ration of the raw materials is not reasonable and the element of Fe is in the form of Fe (III) in the sintered magnet, the crystal structure becomes simple. Further, when other things are added in the process of sintering, the crystal structure will change easily, so the performance of sintered magnet has been influenced badly. Present invention overcomes above disadvantages.

Still further object of the invention is to provide a sintered magnet and a process for producing the magnet material. In the prior art, the process of sintering is so complex and difficult to control that the process is not manoeuvrable. The obtained product has dark blocks and the crystal has deformation easily because the oxygen is not enough. Thus, the quality of the product is not perfect. Present invention overcomes above disadvantages.

The objects of the invention can be achieved by the technical solutions described below.

The invention provides a sintered magnet, which has one Curie temperature and comprises a primary phase of hexagonal ferrite in chemical formula A₁₋ₓMₓFe_{12-y}R_{y}O₁₉, wherein

A represents at least one element selected from Sr, Ba and Ca.

M represents at least one element selected from the group consisting of rare earth elements and Bi, and must contain La as essential component.

R represents at least one element selected from Co, Mn, Zn, Ge and As, and must contain Co as essential component, and the chemical valence of Co is +3.

The subscript x and y are the molar ratio, 0 ≤ x ≤ 0.5, 0 ≤ y ≤ 0.5 (preferably, 0 ≤ x ≤ 0.2, 0 ≤ y ≤ 0.2), x and y are not zero at the same time.

The invention provides a process for producing above sintered magnet, comprising the following steps:
a. Mixing first: According to the molar ratio in chemical formula of above sintered magnet, the raw materials comprising A and Fe are blended and pulverized until their mean particle diameter is not more than 8.0µm. Preferably, the raw materials comprising A and Fe are their oxides or carbonates.
b. Presintering: The mixture obtained in above step is presintered in the air at 1100~1400°C for 0.2∼5 hours to obtain a precalcined material.
c. Mixing second: The precalcined material and some additives are blended and wet pulverized to obtain slurry in which the mean diameter is less than 1.20µm, wherein the said additives are compounds of oxide or carbonate comprising M and R, which include La₂O₃ 0.2~1.8wt% (preferably, 0.2~1.0wt %) by weight of the precalcined material and Co₂O₃ 0.2~1.8wt% (preferably, 0.2~1.0wt %) by weight of the precalcined material;
   (To the mixture of the precalcined material and some additives, a dispersant can be added, which is 0.2~2.0wt% of the precalcined material.
   The said dispersant is a mixture solution of organic surfactant and alkaline compound. The said organic surfactant is polyvinyl alcohol, calcium gluconate, ascorbic acid, sorbose or oleic acid. The said alkaline compound is sodium hydroxide or ammonia.)
d. Moulding and sintering: The concentration of the precalcined material in the obtained slurry is adjusted to 55~85%, and moulded in a magnetic field, and sintered under the condition of sufficient content of oxygen. After sintered, the ions of M and R form a coat on the surface of the precalcined material or get into the inner of the precalcined material in minim, the present sintered magnet is obtained.

The above process for producing sintered magnet also comprises the following step: a flux is added in the step of the first mixing or/and the second mixing. The said flux includes metal oxide, such as Co₂O₃, La₂O₃, ZnO, Bi₂O₃ or MnO₂.

The above process for producing sintered magnet also comprises the following step: calcium compound and/or silicon compound is/are added in the step of the first mixing in 0.3~1.8wt% and 0~1.0wt% by weight of the original primary material respectively. Also, barium compound and/or silicon compound is/are added in the step of the first mixing in 0~0.2wt% and 0~0.2wt% by weight of the original primary material respectively.

The above process for producing sintered magnet also comprises the following step: one or more compounds selected from aluminium compound, chromium compound, boron compound, nickel compound and bismuth compound is/are added in the step of the first mixing in 0~3.0wt%, 0~3.0wt%, 0~3.0wt%, 0~3.0wt% and 0~2.0wt% by weight of the original primary material respectively.

The above process for producing sintered magnet includes the first mixing and presintering, which cause the crystal structure of the ferrite almost perfect and the crystal grain compact. Then the mixture is secondly sintered after adding a little of additives. It is difficult for other elements to get into the inner of the grain and only be solid solution on the grain boundary in the form of coating mostly because the crystal structure of presintered magnet has been improved and the second sintering temperature is low. In this way the density of the sintered magnet is increased, besides the growth of the grain is prohibited in the process of sintering, so both Br and HcJ of the ferrite magnet are increased. As the sintering temperature is reduced, HcJ of the ferrite magnet increases and the magnetic performances of the ferrite magnet are improved.

In the second mixing, the metal oxides, such as Co₂O₃, La₂O₃, ZnO, Bi₂O₃, MnO₂ etc, are added in the proportion of weight, and play the role of fusing agent. As has been said before, these elements are on the grain boundary in the form of solid solution, or only a small quantity of those get into the inner of the grain. Thus, the crystal structure will not be affected greatly and the product with high saturation magnetization Ms is obtained. Especially, the addition of Bi₂O₃ makes the sintering temperature reduce and Br increase. At the same time, the addition of Bi₂O₃ makes the second ball or sand grinding easier and the time of ball or sand grinding less.

In the present invention, element Co is added in the form of Co₂O₃. Comparing with the prior art in which element Co is added in the form of Co²⁺, it is helpful to obtain a La/Co solid solution layer on the crystal boundary which coats the grain. In this way not only decrease the content of La and Co, but also ensure the single phase of the grain and one Curie temperature. In addition it also prohibits the growth of the grain in the second sintering, thereby it can improve the compactness of the sintered magnet and obtain higher Br and HcJ .

In this invention, the value of pH in the slurry is adjusted by adding alkaline compound to the dispersant. It can be avoided that the value of pH is decreased due to using acidic organic surfactant, and the degree of orientation making use of the magnetic field reduces, and the residual magnetic flux density is also influenced.

The added dispersant can be absorbed on the surface of the crystal grain. It is helpful to the rotation of the particles so as to obtain high degree of orientation. The present dispersant can improve the granularity distribution of the pulverized particles. In the prior art water is used as a medium of ball grinding to prepare a anisotropic sintered permanent magnet, it need to add xylene and oleic acid in order to obtain a high degree of orientation. The present invention avoids the addition of these toxic organic mediums that can cause the pollution of the environment and have bad effects to operator.

There is no limitation in the time of adding dispersant if only the dispersant is contained in the slurry to be moulded in the end. Whereas the dispersant has better effect on obtaining higher degree of orientation, if the dispersant can be added in the process of crushing. Because in the process of crushing the temperature of the powder gets higher and the quantity of the dispersant absorbed on the surface of the particles increases. It is helpful to the rotation of the particles so as to obtain high degree of orientation.

The invention provides another sintered magnet, which has one Curie temperature and comprises a primary phase of a hexagonal ferrite in chemical formula A₁₋ₓMₓ[(Fe(III)ₐFe(II)_{1□a})_{12-y}R_{y}]_{z}O₁₉, wherein
A represents Sr or/and Ba;
M represents at least one element selected from the group consisting of rare earth elements and Bi, and must contain La as essential component;
R represents at least one element selected from Co, Ti, Mn, Zn, Ge, As and W, and must contain Co as essential component, and the chemical valence of which is +3;
the subscript x, y, z and a are the molar ratio, 0.05 ≤ x ≤ 0.5, 0.05 ≤ y ≤ 0.5, 0.8 ≤ z ≤ 1.2, 0.997 ≤ a ≤ 0.9995.

Preferably, 0.05 ≤ x ≤ 0.4, 0.05 ≤ y ≤ 0.4, 0.9 ≤ z ≤ 1.1, 0.9985 ≤ a ≤ 0.9995.

More preferably, 1.0 ≤ x/y ≤ 1.5, and z is 1.

The invention provides a process for producing above sintered magnet, comprising the following steps:
a. Mixing first: According to the molar ratio in chemical formula of above sintered magnet, the raw materials comprising A and Fe are blended and pulverized by dry or wet method until their mean particle diameter is not more than 2.0µm. Preferably, the raw materials comprising A and Fe are their oxides or carbonates. The raw materials comprising Fe are the compounds comprising Fe³⁺ and Fe²⁺. Preferably, the pulverizing is conducted by wet pulverization.
b. Presintering: The mixture obtained in above step is presintered in the air at 1100~1300°C (preferably, 1200~1260°C) for 0.2∼5 hours (preferably, 1.5~3 hours) to obtain a precalcined material.
c. Mixing second: The precalcined material and some additives are blended and wet pulverized to obtain slurry in which the mean diameter is less than 0.9µm (preferably, less than 0.7µm). The said additives are oxides or carbonates of M and R, which include La₂O₃ 0.05~2.0wt% by weight of the precalcined material, Co₂O₃ 0.3~3.0wt% by weight of the precalcined material, and Bi₂O₃ 0.05~0.6wt% by weight of the precalcined material. To the mixture of the precalcined material and some additives, a dispersant can be added, which is 0.2~2.0wt% of the precalcined material. The said dispersant is the mixture solution of organic surfactant and alkaline compound. The said organic surfactant is polyvinyl alcohol, calcium gluconate, ascorbic acid, sorbose or oleic acid. The said alkaline compound is sodium hydroxide or ammonia.
d. Moulding and sintering: The concentration of the precalcined material in the obtained slurry is adjusted to 65~80% (preferably, 73~80wt%), and moulded in a magnetic field, and sintered under the condition of sufficient content of oxygen (preferably, the oxygen fractional pressure is not less than 20%) at 1100°C □1260°C (preferably, 1200~1230°C) for 0.2□3 hours (preferably, 0.5~1.5 hours). After sintered, the ions of M and R form a coat on the surface of the precalcined material or get into the inner of the precalcined material in minim, the present sintered magnet is obtained.

The above process for producing sintered magnet also comprises the following step: the flux is added in the first mixing or/and second mixing. The said flux is one or more selected from the following compound: ZnO 0.2~0.6wt%, MnO₂ 0.1~0.4wt%, B₂O₃ 0.2~0.8wt%, CaCO₃ 0.4~2.0wt%, Cr₂O₃ 0.3~1.5wt%, SrCO₃ 0.1~1.0wt%, BaCO₃ 0.1~1.0wt%, As₂O₃ 0.4~2.0wt%, Al₂O₃ 0.3~2.0wt%, SiO₂ 0.3~1.0wt%, TiO₂ 0.02~0.3wt% and WO₃ 0.05∼ 0.5wt%.

Preferably, cheap kaolin (0.6∼3.0 wt %) instead of Al₂O₃ (0.3∼2.0 wt %) and SiO₂ (0.3~1.0 wt %) as flux can reduce the cost of manufacture.

In the prior art, the ion of Fe in the hexagonal ferrite must be in form of Fe (III), and it may cause magnetic property to decrease greatly because of the present of Fe (II) in the crystal. The present inventor used to have such misapprehension. However, after a lot of diligent experiences the inventor found that if the element of Fe presents in form of Fe (III) in the sintered magnet, the crystal structure becomes simple. Further, when other things are added in the process of sintering, the crystal structure will change easily, so that the performance of sintered magnet has been influenced badly. The method of the present invention uses the addition of appropriate amounts of Fe (II) as raw materials in the presintering, as a result, Fe (II) in minim presents in the obtained hexagonal ferrite and improves the performance of sintered magnet. In the case of appropriate amounts of Fe (II), resistance of the resulted ferrite will reduce, and electric charge equation of the ferrite is easily attained when the additives are added. Within the range of the amount of Fe (II) provided by the present invention, the performance of sintered magnet will greatly improved. But if the amount of Fe (II) is excessive, the process of sintering will be seriously short of oxygen and the compactness of the resulted product will decrease obviously. In addition, the excessive amount of the Fe (II) also causes a positive effect to anisotropic constant K of magnetocrystalline and makes coercive force and residual magnetic reduce greatly. In the invention the amount of the Fe (II) is measured by the method of titration of potassium dichromate.

The addition of 0.05~0.6wt% Bi₂O₃ in the process of second mixing not only can reduce the sintering temperature and save the consumed energy of sintering and increase the density and the Br of the product, but also can make the second ball or sand grinding easier and the time of ball or sand grinding less.

In the invention, the sintering is occurred in the condition of sufficient content of oxygen. It insures sufficient oxidation and prohibits the product with dark blocks due to short of the oxygen just as the prior art.

The present invention replaces Fe (III) and Sr (II) in the M type permanent ferrite with La (III), Co (III) and Bi (III) etc, and both Br and HcJ can be increased. As a result, the crystal structure of M type Sr ferrite is improved remarkably and the performance of the permanent ferrite is increased, Ms and K₁ of the replaced permanent ferrite are respectively improved about 2.0% and 10% than conventional ferrite (SrO.6Fe₂O₃). It is helpful for developing in the way of miniaturization and lighten of the product. In the same time, the present invention can improve the temperature dependency of the intrinsic coercive force (HcJ) of the permanent ferrite and prohibit the deterioration of magnetism under low temperature conditions and increase the using stability in a cold area or high altitude area.

The present sintered magnet can be further pulverized according to needs and be used in motor, bonded magnet, or magnetic recording medium and so on.

Compared with the prior art, the present invention has the following merits:
1. Prohibit the growth of the grain in the process of the second sintering, and increase HcJ, and improve the magnetism performance of the ferrite.
2. Improve the compactness of the sintered magnet, and increase the Br and magnetism performance of the ferrite, since the present invention adopts twice mixing, and can make the ions of the additive element on the grain boundary in the form of solid solution.
3. Strongly cut down the cost of the raw material for producing ferrite magnet and be helpful for massive production due to the small quantity of the addition of expensive La and Co as additives in the process of the second pulverization.
4. Improve the crystal magnetic anisotropy constant K₁ and the intrinsic coercive force (HcJ) and obtain optimal magnetic property, greatly simplify the technique of the prior art by means of the addition of Co³⁺ and optimization of the ration of the raw materials.
5. Achieve high residual magnetic induction intensity, a high coercive force, a high intrinsic coercive force, a high magnetic energy product and a low temperature dependency of the intrinsic coercive force at the same time.
6. This method is simple and can be operated conveniently and be carried out easily.
7. Adopting non-toxic organic medium as dispersant is useful not only to the environment but also to the pulverization of the powder as well as the high degree of orientation.
8. The availably reducing of the temperature of presintering and sintering is helpful of cutting down the cost and uniformity of the crystal grain.
9. The proportion of all constitutes is reasonable and the order of the adding is scientific, which are in favour of controlling the size of the crystal grain.
10. By the mean of twice mixing the performance is further improved and the crystal grain is easily controlled.

### Brief description of the illustrations

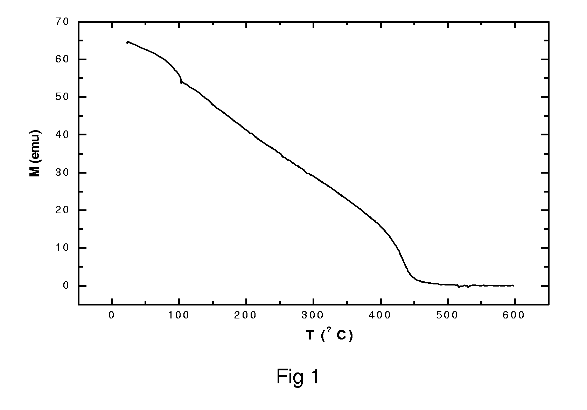

**FIG.1** is the Curie temperature of the sintered magnet in the present invention in EXAMPLE 1.

### EXAMPLES:

### Example 1

As raw materials of preparing precalcined material, the following materials were used.
Fe₂O₃ powder (purification ≥ 99.2%, mean primary particle diameter 1.0µm) 87wt%
SrCO₃ powder (purification ≥ 98.0%, mean primary particle diameter 2.1 µm) 13wt%

In a wet ball mill the raw materials were blended and pulverized until their mean particle diameter was 4.2µm, followed by drying, and presintered in the air at 1280°C for 2 hours, to obtain a precalcined material SrFe₁₂O₁₉ in the form of granules.

To the resulting precalcined material SrFe₁₂O₁₉ 450g, polyvinyl alcohol was added as dispersant, which was 0.4wt% of the precalcined material, and La₂O₃ powder (purification ≥ 99.0wt%, mean primary particle diameter 0.8um) 0.4wt% (amount of each of the all additives is calculated by weight of the precalcined material), Co₂O₃ powder (purification ≥ 99.0wt%, mean primary particle diameter 0.8um) 0.2wt%, SiO₂ 0.4wt%, CaCO₃ 0.7wt% were added as additives, and 680ml of deionised water was further added as ball milling medium. The precalcined material, the dispersant and the additives were pulverized in a ball mill to obtain the slurry in which the powder had a mean diameter of 0.63µm.

After the wet pulverization, the slurry for moulding was subjected to centrifugation to adjust the concentration of the precalcined material in the slurry to 76%. Then compression moulding was conducted while applying a moulding pressure of 400kg/cm² and a magnetic field in the direction of compression of 10000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in the air with a temperature increasing rate of 150°C/h, followed by maintained at 1180°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.The Curie temperature curve of the sintered magnet was shown in FIG.1. The Sample only had a Curie temperature of 453°C. In fact, other samples of the invention had similar Curie temperature curve.

### Example 2

As raw materials of preparing precalcined material, the following materials were used.
Fe₂O₃ powder (purification ≥ 99.2%, mean primary particle diameter 1.0µm) 87wt%
SrCO₃ powder (purification ≥ 98.0%, mean primary particle diameter 2.1µm) 13wt%

In a wet ball mill the raw materials were blended and pulverized until their mean particle diameter was 4.2µm, followed by drying, and presintered in the air at 1280°C for 2 hours, to obtain a precalcined material SrFe₁₂O₁₉ in the form of granules.

To the resulting precalcined material SrFe₁₂O₁₉ 450g, polyvinyl alcohol was added as dispersant, which was 0.4wt% of the precalcined material, and La₂O₃ powder (purification ≥ 99.0wt%, mean primary particle diameter 0.8um) 0.8wt% (amount of each of the all additives is calculated by weight of the precalcined material), CO₂O₃ powder (purification ≥ 99.0wt%, mean primary particle diameter 0.8um) 0.4wt%, SiO₂ 0.4wt%, CaCO₃ 0.7wt% were added as additives, and 680ml of deionised water was further added as ball milling medium. The precalcined material, the dispersant and the additives were pulverized in a ball mill to obtain the slurry in which the powder had a mean diameter of 0.56µm.

After the wet pulverization, the slurry for moulding was subjected to centrifugation to adjust the concentration of the precalcined material in the slurry to 76%. Then compression moulding was conducted while applying a moulding pressure of 400kg/cm² and a magnetic field in the direction of compression of 10000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in the air with a temperature increasing rate of 150°C/h, followed by maintained at 1180°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.

### Example 3

As raw materials of preparing precalcined material, the following materials were used.
Fe₂O₃ powder (purification = 99.2%, mean primary particle diameter 1.0µm)83wt%
BaCO₃ powder (purification = 98.0%, mean primary particle diameter 2.1µm) 17wt%

In a wet ball mill the raw materials were blended and pulverized until their mean particle diameter was 4.0µm, followed by drying, and presintered in the air at 1280°C for 2 hours, to obtain a precalcined material BaFe₁₂O₁₉ in the form of granules.

To the resulting precalcined material BaFe₁₂O₁₉ 450g, calcium gluconate was added as dispersant, which was 0.6wt% of the precalcined material, and La₂O₃ powder (purification ≥ 99.0wt%, mean primary particle diameter 0.8um) 1.2wt% (amount of each of the all additives is calculated by weight of the precalcined material), Co₂O₃ powder (purification ≥ 99.0wt%, mean primary particle diameter 0.8um) 0.6wt%, SiO₂ 0.4wt%, CaCO₃ 0.7wt%, Al₂O₃ 1.0wt% were added as additives, and 680ml of deionised water was further added as ball milling medium. The precalcined material, the dispersant and the additives were pulverized in a ball mill to obtain the slurry in which the powder had a mean diameter of 0.60µm.

After the wet pulverization, the slurry for moulding was subjected to centrifugation to adjust the concentration of the precalcined material in the slurry to 76%. Then compression moulding was conducted while applying a moulding pressure of 10MPa and a magnetic field in the direction of compression of 12000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in a rich oxygen ambience (the oxygen fractional pressure 21 %) with a temperature increasing rate of 150°C/h, followed by maintained at 1180°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.

### Example 4

As raw materials of preparing precalcined material, the following materials were used.
Fe₂O₃ powder (purification = 99.2%, mean primary particle diameter 1.0µm) 90.5wt%
CaCO₃ powder (purification = 98.0%, mean primary particle diameter 2.1µm) 9.5wt%
Relative to the total amount of above primary materials, the following additive materials were further used.
SiO₂ powder (purification = 99.0%, mean primary particle diameter 0.5µm) 0.2wt%
BaCO₃ powder (purification = 99.0%, mean primary particle diameter 1.5µm) 0.2wt%

In a wet ball mill the raw materials, SiO₂ powder and BaCO₃ powder were blended and pulverized until their mean particle diameter was 4.0µm, followed by drying, and presintered in the air at 1280°C for 2 hours, to obtain a precalcined material CaFe₁₂O₁₉ in the form of granules, which also include a little Si and Ba.

To the resulting precalcined material CaFe₁₂O₁₉ 450g, La₂O₃ 0.7wt%, Co₂O₃ 0.9wt% and Al₂O₃ 1.0wt% were added as additives, and 680ml of deionised water was further added as ball milling medium. The precalcined material and the additives were pulverized in a ball mill to obtain the slurry in which the powder had a mean diameter of 0.62µm.

After the wet pulverization, the slurry for moulding was subjected to centrifugation to adjust the concentration of the precalcined material in the slurry to 76%. Then compression moulding was conducted while applying a moulding pressure of 10MPa and a magnetic field in the direction of compression of 12000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in the air with a temperature increasing rate of 150°C/h, followed by maintained at 1180°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.

### Example 5

As raw materials of preparing precalcined material, the following materials were used.
Fe₂O₃ powder (purification = 99.2%, mean primary particle diameter 1.0µm) 85.6wt%
SrCO₃ powder (purification = 98.0%, mean primary particle diameter 2.1µm) 9.2wt%
BaCO₃ powder (purification = 99.0%, mean primary particle diameter 0.8µm) 5.2wt%

In a wet ball mill the raw materials were blended and pulverized until their mean particle diameter was 4.2µm, followed by drying, and presintered in the air at 1280°C for 2 hours, to obtain a precalcined material Sr_{0.7}Ba_{0.3}Fe₁₂O₁₉ in the form of granules.

To the resulting precalcined material Sr_{0.7}Ba_{0.3}Fe₁₂O₁₉ 450g, sorbose was added as dispersant, which was 1.7wt% of the precalcined material, and La₂O₃ powder (purification ≥ 99.0wt%, mean primary particle diameter 0.8um) 0.5wt%, Co₂O₃ powder (purification ≥ 99.0wt%, mean primary particle diameter 0.8um) 0.2wt%, Bi₂O₃ powder (purification ≥ 99.0wt%, mean primary particle diameter 0.5um) 0.1wt% and ZnO powder (purification ≥ 99.0wt%, mean primary particle diameter 1.0um) 0.3wt% were added as additives, and 680ml of deionised water was further added as ball milling medium. The precalcined material, the dispersant and the additives were pulverized in a ball mill to obtain the slurry in which the powder had a mean diameter of 0.61µm.

After the wet pulverization, the slurry for moulding was subjected to centrifugation to adjust the concentration of the precalcined material in the slurry to 78%. Then compression moulding was conducted while applying a moulding pressure of 10MPa and a magnetic field in the direction of compression of 13000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in the air with a temperature increasing rate of 150°C/h, followed by maintained at 1180°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.

### Comparative Example 1

As raw materials, the following materials were used.
Fe₂O₃ powder (purification = 99.2%, mean primary particle diameter 1.0µm) 82.5wt%
SrCO₃ powder (purification = 98.0%, mean primary particle diameter 2.1µm) 8.2wt%
La₂O₃ powder (purification = 99.0%, mean primary particle diameter 0.8µm) 6.0wt%
CoO powder (purification = 99.0%, mean primary particle diameter 0.8µm) 3.3wt%

Relative to the total amount of above said primary materials, the following additive materials were further used.
SiO₂ powder (purification = 99.0%, mean primary particle diameter 0.5µm) 0.2wt%
CaCO₃ powder (purification = 99.0%, mean primary particle diameter 1.5µm) 0.2wt%
BaCO₃ powder (purification = 99.0%, mean primary particle diameter 1.5µm) 0.4wt%

In a wet ball mill the raw materials, SiO₂ powder, CaCO₃ powder and BaCO₃ powder were blended, followed by drying, and presintered in the air at 1250°C for 2 hours, to obtain a precalcined material Sr_{0.6}La_{0.4}Fe_{11.6}CO_{0.4}O₁₉ in the form of granules, which also include a little Si, Ba and Ca.

To the resulting precalcined material Sr_{0.6}La_{0.4}Fe_{11.6}CO_{0.4}O₁₉ 450g, oleic acid was added as dispersant, which was 1.3wt% of the precalcined material, and SiO₂ 0.3wt%, CaCO₃ 0.6wt%, La₂O₃ 1.0wt%, and SrCO₃ 0.6wt% were added as additives, and 820ml of xylene was further added as ball milling medium. The precalcined material and the additives were pulverized in a ball mill to obtain the slurry in which the powder had a mean diameter of 0.6µm.

After the wet pulverization, the slurry for moulding was subjected to centrifugation to adjust the concentration of the precalcined material in the slurry to 82%. Then compression moulding was conducted while applying a moulding pressure of 10MPa and a magnetic field in the direction of compression of 13000 Oe. The resulting moulded body had a cylindrical shape having a diameter of 43.2mm and a height of 10mm.

The moulded body was subjected to a heat treatment at a temperature of from 100°C to 600°C to sufficiently remove oleic acid, and then sintered in the air with a temperature increasing rate of 150°C/h, followed by maintained at 1230°C for 0.5 hour, to obtain a sintered magnet. The crystal structure in the resulting sintered magnet has changed that substitute basically all of M and R for Fe in the crystal structure.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.

### Comparative Example 2:

As raw materials of preparing precalcined material, the following materials were used.
Fe₂O₃ powder (purification ≥ 99.2%, mean primary particle diameter 1.0µm) 87wt%
SrCO₃ powder (purification ≥ 98.0%, mean primary particle diameter 2.1µm) 13wt%

In a wet ball mill the raw materials were blended and pulverized until their mean particle diameter was 4.2m, followed by drying, and presintered in the air at 1280°C for 2 hours, to obtain a precalcined material SrFe₁₂O₁₉ in the form of granules.

To the resulting precalcined material SrFe₁₂O₁₉ 450g, polyvinyl alcohol was added as dispersant, which was 0.4wt% of the precalcined material, and SiO₂ 0.4wt% and CaCO₃ 0.7wt% were added as additives, and 680ml of deionised water was further added as ball milling medium. The precalcined material and the additives were pulverized in a ball mill to obtain the slurry in which the powder had a mean diameter of 0.65µm.

After the wet pulverization, the slurry for moulding was subjected to centrifugation to adjust the concentration of the precalcined material in the slurry to 76%. Then compression moulding was conducted while applying a moulding pressure of 400kg/cm² and a magnetic field in the direction of compression of 10000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in the air with a temperature increasing rate of 150°C/h, followed by maintained at 1180°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 1.

All of the samples obtained in Example 1~5 and Comparative Example 1∼2 were observed by means of the transmission electron microscope and energy dispersive spectrometer (TEM-EDS) to analyze the size of the crystal boundary, and by means of the density apparatus to test the density of the magnet, and by means of the vibrating sample magnetometer (VSM) to test the Curie Temperature. The measure results were shown in Table 2.

**Table 1:Properties of sintered product**

| Sample | Br(mT) | Hcb(kA/m) | HcJ(kA/m) | (BH)max (kj/m3) | BHcJ (%/°C) |
|---|---|---|---|---|---|
| Example 1 | 422.3 | 274.7 | 299.3 | 34.0 | 0.18 |
| Example 2 | 438 | 290.5 | 317.5 | 36.0 | 0.17 |
| Example 3 | 432 | 318.6 | 358.3 | 35.2 | 0.17 |
| Example 4 | 422 | 286.6 | 302.5 | 33.1 | 0.17 |
| Example 5 | 435 | 294.5 | 321.2 | 35.6 | 0.20 |
| Comparative Example 1 | 431 | 320 | 365 | 34.5 | 0.15 |
| Comparative Example 2 | 408 | 246.8 | 263.2 | 31.3 | 0.23 |

**Table 2:Size of the crystal boundary, density of the magnet and Curie temperature of sintered product**

| Sample | size of the crystal boundary: nm | density of the magnet (g/cm³) | Curie temperature T_{c}(°C) |
|---|---|---|---|
| Example 1 | 96 | 5.03 | 453 |
| Example 2 | 100 | 5.05 | 450 |
| Example 3 | 110 | 5.10 | 448 |
| Example 4 | 105 | 5.02 | 450 |
| Example 5 | 105 | 5.05 | 450 |
| Comparative Example 1 | 70 | 5.00 | 445 |
| Comparative Example 2 | 30 | 4.92 | 468 |

It is clear from table 1 and table 2 that the samples obtained by the process of the invention have a remarkably increasing size of the crystal boundary and density of the magnet while the samples exhibit magnetic properties as similar to the comparative samples.

### Example 6

As raw materials of preparing precalcined material, the following materials were used.
Fe₃O₄ powder (purification ≥ 99.2%, mean primary particle diameter: 1.0µm) 0.38wt%
Fe₂O₃ powder (purification ≥ 99.2%, mean primary particle diameter: 1.0µm) 86.26wt%
SrCO₃ powder (purification ≥98.0%, mean primary particle diameter: 2.1µm) 13.36wt%

The raw materials were blended and pulverized in a wet ball mill until their mean particle diameter was 4.2µm, followed by drying, and presintered in the air at 1280°C for 2 hours, to obtain a precalcined material Sr(Fe(III)_{0.9985}Fe(II)_{0.0015})₁₂ O₁₉ in the form of granules.

To the resulting precalcined material Sr(Fe(III)_{0.9985}Fe(II)_{0.0015})₁₂O₁₉ 450g, polyvinyl alcohol was added as dispersant, which was 0.4wt% of the precalcined material, and La₂O₃ powder (purification ≥ 99.0wt%, original mean particle diameter: 0.8um) 1.5wt% (amount of each of the all additives is calculated by weight of the precalcined material), Co₂O₃ powder (purification ≥ 99.0wt%, original mean particle diameter: 0.8um) 0.8wt%,SiO₂ 0.4wt%, CaCO₃ 0.7wt% and Bi₂O₃ 0.05wt% were added as additives, and 680ml of deionised water was further added as ball milling medium. The precalcined material, the dispersant and the additives were pulverized in a ball mill to obtain the slurry in which the powder had a mean diameter of 0.7µm.

After the wet pulverization, the slurry for moulding was subjected to centrifugation to adjust the concentration of the precalcined material in the slurry to 76%. Then compression moulding was conducted while applying a moulding pressure of 10MPa and a magnetic field in the direction of compression of 12000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in an oxygen-rich gas atmosphere (the oxygen partial pressure was 21 %) with a temperature increasing rate of 150°C/h, followed by maintained at 1220°C for 1.5 hour, whereby a sintered magnet was obtained.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 3.

### Comparative Example 3:

As raw materials, the following materials were used.
Fe₂O₃ powder (purification ≥ 99.8%, mean primary particle diameter: 1.0µm) 85.6wt%
SrCO₃ powder (purification ≥98.0%, mean primary particle diameter: 2.1µm) 12.1%
La₂O₃ powder (purification ≥ 99.0%, mean primary particle diameter: 0.8µm) 1.5wt%
CoO powder (purification ≥ 96.0%, mean primary particle diameter: 0.8µm) 0.8wt%

The raw materials were blended in a wet ball mill, followed by drying, and presintered in the air at 1230°C for 2 hours, to obtain a precalcined material in the form of granules.

To the resulting precalcined material, oleic acid was added as dispersant, which was 0.4wt% of the precalcined material, and SiO₂ 0.4wt% and CaCO₃ 0.7wt% were added as additives, and 680ml of deionized water was further added as a ball milling medium. The precalcined material and the additives were pulverized in a ball mill to obtain the slurry in which the powder had a mean diameter of 0.7µm.

After the wet pulverization, the slurry for moulding was subjected to centrifugation to adjust the concentration of the precalcined material in the slurry to 76%. Then compression moulding was conducted while applying a moulding pressure of 10MPa and a magnetic field in the direction of compression of 12000 Oe. The resulting moulded body had a cylindrical shape having a diameter of 43.2mm and a height of 13mm.

The moulded body was subjected to a heat treatment at a temperature of from 100°C to 600°C to sufficiently remove dispersant, and then sintered in the air with a temperature increasing rate of 150°C/h, followed by maintained at 1220°C for 1.5 hour, whereby a sintered magnet was obtained.

The crystal structure in the resulting sintered magnet has changed that substitute basically all of M and R for Fe in the crystal structure. The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results are shown in Table 3.

### Example 7

As raw materials of preparing precalcined material, the following materials were used.
Fe₃O₄ powder (purification ≥ 99.2%, mean primary particle diameter: 1.0µm) 0.13wt%
Fe₂O₃ powder (purification ≥ 99.2%, mean primary particle diameter: 1.0µm) 86.51wt%
SrCO₃ powder (purification ≥98.0%, mean primary particle diameter: 2.1µm) 13.36wt%

In a wet ball mill the raw materials were blended and pulverized until their mean particle diameter was 4.2µm, followed by drying, and presintered in the air at 1200°C for 1.5 hours, to obtain a precalcined material Sr(Fe(III)_{0.9995} Fe(II)_{0.0005})₁₂O₁₉ in the form of granules.

To the resulting precalcined material Sr(Fe(III)_{0.9995}Fe(II)_{0.0005})₁₂O₁₉ 450g, mixture solution of oleic acid and NaOH was added as dispersant, in which the oleic acid is 1.5wt% of the precalcined material and NaOH was of 0.1wt%, and La₂O₃ powder (purification ≥ 99.0wt%, original mean particle diameter: 0.8um) 4.2wt%,Co₂O₃ powder (purification ≥ 99.0wt%, original mean particle diameter: 0.8um) 2.4wt%,SiO₂ 0.3wt%, CaCO₃ 0.7wt%, Al₂O₃ 1.0wt% and Bi₂O₃ 0.6wt% were added as additives, and 680ml of deionised water was further added as ball milling medium. The precalcined material, the dispersant and the additives were pulverized in a ball mill to obtain the slurry in which the powder had a mean diameter of 0.6µm.

After the wet pulverization, the slurry for moulding was subjected to centrifugation to adjust the concentration of the precalcined material in the slurry to 76%. Then compression moulding was conducted while applying a moulding pressure of 10MPa and a magnetic field in the direction of compression of 12000 Oe. The resulting moulded body had a cylindrical shape having a diameter of 43.2mm and a height of 13mm.

The moulded body was subjected to a heat treatment at a temperature of from 100°C to 600°C to sufficiently remove oleic acid, and then sintered in an oxygen-rich gas atmosphere (the oxygen partial pressure was 25%) with a temperature increasing rate of 150°C/h, followed by maintained at 1220°C for 0.5 hour, whereby a sintered magnet was obtained.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 3.

### Comparative Example 4:

As raw materials, the following materials were used.
Fe₂O₃ powder (purification ≥ 99.8%, mean primary particle diameter: 1.0µm) 84.5wt%
SrCO₃ powder (purification ≥98.0%, mean primary particle diameter: 2.1µm) 10.8%
La₂O₃ powder (purification ≥ 99.0%, mean primary particle diameter: 0.8µm) 3.2wt%
CoO powder (purification ≥ 96.0%, mean primary particle diameter: 0.8µm) 0.8wt%
Co₃O₄ powder (purification ≥99.0%, mean primary particle diameter: 0.8µm) 0.7wt%

The raw materials were blended in a wet ball mill, followed by drying, and presintered in the air at 1200°C for 1.5 hours, to obtain a precalcined material in the form of granules.

To the resulting precalcined material, mixture solution of oleic acid and NaOH was added as dispersants, in which the oleic acid was 1.5wt% of the precalcined material and NaOH was of 0.1 wt%, and SiO₂ 0.3wt%, CaCO₃ 0.7wt%, La₂O₃1.0wt%, CoO 0.9wt%, and Al₂O₃ 1.0wt% were added as additives, and 680ml of deionised water was further added as ball milling medium. The precalcined material and the additives were pulverized in a ball mill to obtain the slurry in which the powder had a mean diameter of 0.6µm.

After the wet pulverization, the slurry for moulding was subjected to centrifugation to adjust the concentration of the precalcined material in the slurry to 76%. Then compression moulding was conducted while applying a moulding pressure of 10MPa and a magnetic field in the direction of compression of 12000 Oe. The resulting moulded body had a cylindrical shape having a diameter of 43.2mm and a height of 13mm.

The moulded body was subjected to a heat treatment at a temperature of from 100°C to 600°C to sufficiently remove oleic acid, and then sintered in an oxygen-rich gas atmosphere (the oxygen partial pressure was 25%) with a temperature increasing rate of 150°C/h, followed by maintained at 1220°C for 1.5 hour, whereby a sintered magnet was obtained.

The crystal structure in the resulting sintered magnet has changed that substitute basically all of M and R for Fe in the crystal structure. The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 3.

### Example 8

As raw materials of preparing precalcined material, the following materials were used.
Fe₃O₄ powder (purification ≥ 99.2%, mean primary particle diameter: 1.0µm) 0.25wt%
Fe₂O₃ powder (purification ≥ 99.2%, mean primary particle diameter: 1.0µm) 86.39wt%
SrCO₃ powder (purification ≥98.0%, mean primary particle diameter: 2.1µm) 13.36wt%

The raw materials were blended and pulverized in a wet ball mill until their mean particle diameter was 4.2µm, followed by drying, and presintered in the air at 1250°C for 2.5 hours, to obtain a precalcined material Sr(Fe(III)_{0.999}Fe(II)_{0.001})₁₂O₁₉ in the form of granules.

To the resulting precalcined material Sr(Fe(III)_{0.999}Fe(II)_{0.0001})₁₂O₁₉ 450g, ascorbic acid was added as dispersant, which was 1.5wt% of the precalcined material, and La₂O₃ powder (purification ≥ 99.0wt%, original mean particle diameter: 0.8um) 7.3wt%,Co₂O₃ powder (purification ≥ 99.0wt%, original mean particle diameter: 0.8um) 3.6wt%,SiO₂ powder (purification ≥ 99.0wt%, original mean particle diameter: 0.5um) 0.5wt%, CaCO₃ powder (purification ≥ 99.0wt%, original mean particle diameter: 1.5um) 1.0wt%, and Bi₂O₃ 0.2wt% were added as additives, and 680ml of deionised water was further added as ball milling medium. The precalcined material, the dispersant and the additives were pulverized in a ball mill to obtain the slurry in which the powder had a mean diameter of 0.62µm.

After the wet pulverization, the slurry for moulding was subjected to centrifugation to adjust the concentration of the precalcined material in the slurry to 73%. Then compression moulding was conducted while applying a moulding pressure of 10MPa and a magnetic field in the direction of compression of 13000 Oe. The resulting moulded body had a cylindrical shape having a diameter of 43.2mm and a height of 13mm.

The moulded body was subjected to a heat treatment at a temperature of from 100°C to 600°C to sufficiently remove oleic acid, and then sintered in the air with a temperature increasing rate of 150°C/h, followed by maintained at 1220°C for 1.5 hour, to obtain a sintered magnet.

The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 3.

### Comparative Example 5:

As raw materials, the following materials were used.
Fe₂O₃ powder (purification ≥ 99.8%, mean primary particle diameter: 1.0µm) 82.5wt%
SrCO₃ powder (purification ≥98.0%, mean primary particle diameter: 2.1µm) 7.6%
La₂O₃ powder (purification ≥ 99.0%, mean primary particle diameter: 0.8µm) 6.3wt%
CoO powder (purification ≥ 96.0%, mean primary particle diameter: 0.8µm) 2.9wt%
Co₃O₄ powder (purification ≥99.0%, mean primary particle diameter: 0.8µm) 0.7wt%

The raw materials were blended in a wet ball mill, followed by drying, and presintered in the air at 1250°C for 2.5 hours, to obtain a precalcined material in the form of granules.

To the resulting precalcined material, mixture solution of oleic acid and NaOH was added as dispersant, in which the oleic acid was 1.5wt% of the precalcined material and NaOH was of 0.1wt%, and SiO₂ powder (purification ≥ 99.0wt%, original mean particle diameter: 0.5um) 0.5wt% and CaCO₃ powder (purification ≥ 99.0wt%, original mean particle diameter: 1.5um) 1.0wt% were added as additives, and 680ml of deionised water was further added as ball milling medium. The precalcined material and the additives were pulverized in a ball mill to obtain slurry in which the powder had a mean diameter of 0.62µm.

After the wet pulverization, the slurry for moulding was subjected to centrifugation to adjust the concentration of the precalcined material in the slurry to 73%. Then compression moulding was conducted while applying a moulding pressure of 10MPa and a magnetic field in the direction of compression of 13000 Oe. The resulting moulded body had a cylindrical shape having a diameter of 43.2mm and a height of 13mm.

The moulded body was subjected to a heat treatment at a temperature of from 100°C to 600°C to sufficiently remove oleic acid, and then sintered in an oxygen-rich gas atmosphere (the oxygen partial pressure was 25%) with a temperature increasing rate of 150°C/h, followed by maintained at 1220°C for 1.5 hour, whereby a sintered magnet was obtained.

The crystal structure in the resulting sintered magnet has changed that substitute basically all of M and R for Fe in the crystal structure. The upper and lower surfaces of the resulting sintered magnet were grinded, and was measured for the residual magnetic flux density (Br), the coercive force (Hcb and HcJ), the maximum energy product ((BH)max), and the coercivity temperature coefficient (βHcJ). The measure results were shown in Table 3.

**Table 3: Properties of sintered product**

| Sample | Br(mT) | Hcb(kA/m) | HcJ(kA/m) | (BH)max(kj/m3) |
|---|---|---|---|---|
| Example 6 | 420 | 298.6 | 328 | 34.2 |
| Comparative Example 3 | 410 | 285 | 302 | 32.8 |
| Example 7 | 430 | 318.5 | 406 | 35.8 |
| Comparative Example 4 | 425 | 306.5 | 382.2 | 33.4 |
| Example 8 | 451 | 331.2 | 360 | 38.3 |
| Comparative Example 5 | 440 | 318.5 | 342 | 35.8 |

## Claims

1. A sintered magnet, which has one Curie temperature and comprises the primary phase of a hexagonal ferrite in chemical formula
A₁₋ₓMₓFe_{12-y}R_{y}O₁₉, wherein:
A represents at least one element selected from Sr, Ba and Ca;
M represents at least one element selected from the group consisting of rare earth elements and Bi, and must contain La as essential component;
R represents at least one element selected from Co, Mn, Zn, Ge and As, and must contain Co as essential component, and the chemical valence of which is +3; and
the subscript x and y are the molar ratio, 0 ≤ x ≤ 0.5, 0 ≤ y ≤ 0.5, x and y are not zero at the same time.

2. A sintered magnet according to claim 1, wherein 0 ≤ x ≤ 0.2, 0 ≤ y ≤ 0.2, x and y are not zero at the same time.

3. A process for producing the sintered magnet of claim 1, comprising the following steps:
a. First mixing procedure: According to the molar ratio in chemical formula of above sintered magnet, the raw materials comprising A and Fe are blended and pulverized until their mean particle diameter is not more than 8.0µm;
b. Presintering procedure: The mixture obtained in above step is presintered in the air to obtain a precalcined material;
c. Second mixing procedure: The precalcined material and some additives are blended and wet pulverized to obtain the slurry in which the mean diameter is less than 1.20µm, wherein the said additives are oxides or carbonates comprising M and R, in which include La₂O₃ 0.2~1.8wt% by weight of the precalcined material and Co₂O₃ 0.2~1.8wt% by weight of the precalcined material;
d. Moulding procedure and sintering procedure: The obtained slurry is adjusted of the concentration of the precalcined material, and moulded in a magnetic field, and sintered under the condition of sufficient content of oxygen, and after sintering, the ions of M and R form a coat on the surface of the precalcined material or get into the inner of the precalcined material in minim, whereby the present sintered magnet was obtained.

4. A process for producing the sintered magnet according to claim 3, wherein the said raw materials comprising A and Fe in the step a are their oxides or their carbonates.

5. A process for producing the sintered magnet according to claim 3, wherein the presintering temperature is 1100~1400°C and the presintering time is 0.2∼5 hours in the step b.

6. A process for producing the sintered magnet according to claim 3, wherein the said additives in the step b include La₂O₃ 0.2~1.0wt% by weight of the precalcined material and Co₂O₃ 0.2~1.0wt% by weight of the precalcined material.

7. A process for producing the sintered magnet according to claim 3, wherein to the mixture of the precalcined material and some additives in the step c, the dispersant can be added, which is 0.2~2.0wt% of the precalcined material; the said dispersant is the mixture solution of organic surfactant and alkaline compound.

8. A process for producing the sintered magnet according to claim 7, wherein the said organic surfactant is polyvinyl alcohol, calcium gluconate, ascorbic acid, sorbose or oleic acid; the said alkaline compound is sodium hydroxide or ammonia.

9. A process for producing the sintered magnet according to claim 3, wherein the concentration of the precalcined material in the obtained slurry is adjusted to 55~85% in the step d.

10. A process for producing the sintered magnet according to claim 3, wherein the process also comprises the following step: the flux is added in the step of the first mixing or/and second mixing.

11. A process for producing the sintered magnet according to claim 10, wherein the said flux includes metal oxide, such as Co₂O₃, La₂O₃, ZnO, Bi₂O₃ or MnO₂.

12. A process for producing the sintered magnet according to claim 3, wherein the process also comprises the following step: calcium compound and/or silicon compound is/are added in the step of the first mixing in 0.3~1.8wt% and 0~1.0wt% by weight of the original primary material respectively.

13. A process for producing the sintered magnet according to claim 3, wherein the process also comprises the following step: one or more compounds selected from aluminium compound, chromium compound, boron compound, nickel compound and bismuth compound is/are added in the step of the first mixing in 0~3.0wt%, 0~3.0wt%, 0~3.0wt%, 0~3.0wt% and 0~2.0wt% by weight of the original primary material respectively.

14. A sintered magnet, which has one Curie temperature and comprises the primary phase of a hexagonal ferrite in chemical formula
A₁₋ₓMₓ[(Fe(III)ₐFe(II)_{1□a})_{12-y}R_{y}]_{z}O₁₉,
wherein A represents Sr or/and Ba,
M represents at least one element selected from the group consisting of rare earth elements and Bi, and must contain La as essential component,
R represents at least one element selected from Co, Ti, Mn, Zn, Ge, as and W, and must contain Co as essential component, and the chemical valence of Co is +3, and
the subscripts x, y, z and a are the molar ratio, 0.05 ≤ x ≤ 0.5, 0.05 ≤ y ≤ 0.5, 0.8 ≤ z ≤ 1.2, 0.997 ≤ a ≤ 0.9995.

15. A sintered magnet according to claim 14, wherein 0.05 ≤ x ≤ 0.4, 0.05 ≤ y ≤ 0.4, 0.9 ≤ z ≤ 1.1, 0.9985 ≤ a ≤ 0.9995.

16. A sintered magnet according to claim 14, wherein 1.0 ≤ x/y ≤ 1.5 and z is 1.

17. A process for producing the sintered magnet of claim 14, comprising the following steps:
a. First mixing procedure: According to the molar ratio in chemical formula of above-mentioned sintered magnet, the raw materials comprising A and Fe are blended and pulverized by dry or wet method until their mean particle diameter is not more than 2.0µm, wherein the raw materials comprising Fe are the compounds comprising Fe³⁺ and Fe²⁺;
b. Presintering procedure: The mixture obtained in above step is presintered in the air to obtain a precalcined material;
c. Second mixing procedure: The precalcined material and some additives are blended and wet pulverized to obtain the slurry in which the mean diameter is less than 0.9µm, wherein the said additives are oxides or carbonates comprising M and R, in which include La₂O₃ 0.05~2.0wt% by weight of the precalcined material, Co₂O₃ 0.3~3.0wt% by weight of the precalcined material, and Bi₂O₃ 0.05~0.6wt% by weight of the precalcined material;
d. Moulding procedure and sintering procedure: The obtained slurry is adjusted of the concentration of the precalcined material in the slurry, and moulded in a magnetic field, and sintered under the condition of sufficient content of oxygen, wherein after sintering the ions of M and R form a coat on the surface of the precalcined material or get into the inner of the precalcined material in minim, whereby the present sintered magnet was obtained.

18. A process for producing the sintered magnet according to claim 17, wherein the said raw materials comprising A and Fe in the step a are their oxides or their carbonates.

19. A process for producing the sintered magnet according to claim 17, wherein the presintering temperature is 1100~1300°C and the presintering time is 0.2∼5 hours in the step b.

20. A process for producing the sintered magnet according to claim 17, wherein the presintering temperature is 1200~1260°C and the presintering time is 1.5~3 hours in the step b.

21. A process for producing the sintered magnet according to claim 17, wherein the mixture of the precalcined material and some additives in step c are wet pulverized to obtain the slurry in which the mean diameter is less than 0.7µm.

22. A process for producing the sintered magnet according to claim 17, wherein to the mixture of the precalcined material and some additives in the step c, the dispersant can be added, which is 0.2~2.0wt% of the precalcined material; the said dispersant is the mixture solution of organic surfactant and alkaline compound.

23. A process for producing the sintered magnet according to claim 22, wherein the said organic surfactant is polyvinyl alcohol, calcium gluconate, ascorbic acid, sorbose or oleic acid; the said alkaline compound is sodium hydroxide or ammonia.

24. A process for producing the sintered magnet according to claim 17, wherein the concentration of the precalcined material in the obtained slurry is adjusted to 65~80% in the step d.

25. A process for producing the sintered magnet according to claim 17, wherein the concentration of the precalcined material in the obtained slurry is adjusted to 73~80% in the step d.

26. A process for producing the sintered magnet according to claim 17, wherein the sintering temperature is 1100°C - 1260°C and sintering time is 0.2□3 hours in the step d.

27. A process for producing the sintered magnet according to claim 17, wherein the sintering temperature is 1200° - 1230°C and sintering time is 0.5 - 1.5 hours in the step d.

28. A process for producing the sintered magnet according to claim 17, wherein the oxygen partial pressure is not less than 20% in the step d.

29. A process for producing the sintered magnet according to claim 17, wherein the process also comprises the following step: the flux is added in the step of the first mixing or/and second mixing.

30. A process for producing the sintered magnet according to claim 29, wherein the said flux is one or more selected from the following: ZnO 0.2~0.6wt%, MnO₂ 0.1~0.4wt%, B₂O₃ 0.2~0.8wt%, CaCO₃ 0.4~2.0wt%, Cr₂O₃ 0.3~1.5wt%, SrCO₃ 0.1~1.0wt%, BaCO₃ 0.1~1.0wt%, A_{S2}O₃ 0.4~2.0wt%, Al₂O₃ 0.3~2.0wt%, SiO₂ 0.3~1.0wt%, TiO₂ 0.02~0.3wt% and WO₃ 0.05- 0.5wt%.

31. A process for producing the sintered magnet according to claim 30, wherein kaolin 0.6∼3.0 wt% was instead of Al₂O₃ 0.3∼2.0 wt% and SiO₂ 0.3~1.0 wt% as flux.
